# EUROPÄISCHE PATENTSCHRIFT

(11) **EP 2 329 553 B1**
(45) Veröffentlichungstag und Bekanntmachung des Hinweises auf die Patenterteilung: **03.04.2013**
(21) Anmeldenummer: 09780936.2
(22) Anmeldetag: 22.07.2009
(51) Int. Cl.: H01M 6/50, H01M 10/42

(54) **BATTERIEPRÜFSTAND**
BATTERY TEST RIG
BANC D'ESSAI DE BATTERIES

(30) Priorität: 16.09.2008 DE 102008042135
(43) Veröffentlichungstag der Anmeldung: 08.06.2011
(60) Teilanmeldung: 12182631.7
(73) Patentinhaber: Robert Bosch GmbH, 70442 Stuttgart (DE)
(72) Erfinder: DALLINGER, Frank, 70499 Stuttgart (DE); STEMMANN, Jannis, Wuxi 214028 New District (CN); KERN, Rainer, 70174 Stuttgart (DE)
(86) Internationale Anmeldenummer: PCT/EP2009/059437
(87) Internationale Veröffentlichungsnummer: WO 2010/031620

(56) Entgegenhaltungen:
- WO-A1-2006/088021
- JP-A- 8 190 938

## Beschreibung

### Stand der Technik

Die vorliegende Erfindung betrifft einen Batterieprüfstand, mit welchem verschiedene Batterien untersucht bzw. überprüft werden.

Batterien werden beispielsweise im Rahmen von Entwicklung und Produktion hinsichtlich ihrer Funktion, als auch hinsichtlich Belastungsgrenzen überprüft. Dabei kann sich jedoch ein erhebliches Gefahrenpotential ergeben. Insbesondere bei übermäßiger Beladung oder Entladung oder auch bei sonstigen äußeren Umwelteinflüssen, wie z. B. einem Temperaturanstieg, können bei Reaktionen zwischen den vorhandenen Batteriematerialien (Kathode, Anode, Elektrolyt) gasförmige Spaltprodukte entstehen, welche zu einem Druckanstieg führen können. Ferner können exotherme Reaktionen eine weitere Wärmezufuhr nach sich ziehen. Infolgedessen kann die Batterie durch eine Explosion zerstört werden. Hierdurch können Arbeiten an Batterieprüfständen gefährlich sein. Es wäre somit wünschenswert, bei Batterieprüfständen eine verbesserte Sicherheit insbesondere für die dort arbeitenden Mitarbeiter zu haben.

JP 08190938 A beschreibt einen Batterieprüfstand mit einer Heiz- und einer Kühlvorrichtung zum Variieren von Prüftemperaturen.

WO 2006/088021 beschreibt eine Batterieprüfvorrichtung zur Ausführung von Sicherheitsprüfungen, wobei ein von der Batterie abgegebenes Gas abgesaugt und behandelt werden kann.

### Vorteile der Erfindung

Der erfindungsgemäße Batterieprüfstand mit den Merkmalen des Patentanspruchs 1 weist demgegenüber den Vorteil auf, dass eine Prüfung bzw. Untersuchung von Batterien mit einer erhöhten Sicherheit möglich ist. Erfindungsgemäß kann dabei bei Bedarf eine Kühlung mit hoher Effektivität ausgeführt werden. Dies wird erfindungsgemäß dadurch erreicht, dass der Batterieprüfstand eine Kühlvorrichtung umfasst, welche mit einer Regelungseinheit verbunden ist. Eine Sensoreinrichtung ist mit der Regelungseinheit verbunden, um die Batterie zu überwachen. Wenn die Regelungseinheit erfasst, dass eine Gefahrensituation vorliegt, aktiviert sie die Kühlvorrichtung, um eine Kühlung der Batterie auszuführen, um somit einen kritischen Batteriezustand zu verhindern. Durch die erfindungsgemäße äußere Kühlung der Batterie kann somit einerseits eine Temperatur der Batterie als auch ein Druck innerhalb der Batterie abgesenkt werden, so dass eine kritische Situation vermieden werden kann. Durch die erfindungsgemäße Verwendung der Kühlvorrichtung können insbesondere auch Forschungsmuster von Batterien sicher überprüft werden.

Dabei umfasst die Kühlvorrichtung einen Druckbehälter, welcher über eine Leitung mit einer Prüfzelle, in der die Batterie angeordnet ist, verbunden ist. Weiterhin umfasst die Kühlvorrichtung ein Schaltventil, welches mit der Regelungseinheit verbunden ist und welches in einem Gefahrenfall geöffnet wird, um ein im Druckbehälter gespeichertes Kühlmedium auf die Batterie zu leiten. Hierdurch kann die Batterie großflächig mit dem Kühlmittel benetzt werden, so dass sich eine hohe Kühleffektivität ergibt. Ferner kann der Druckbehälter einen großen Vorrat des Kühlmediums aufweisen, um eine möglichst lange Kühlung der Batterie ausführen zu können.

Die Unteransprüche zeigen bevorzugte Weiterbildungen der Erfindung.

Weiter bevorzugt umfasst die Kühlvorrichtung eine Düse, welche in der Prüfzelle angeordnet ist, und welche eine Expansion des Kühlmediums nahe der Batterie ermöglicht. Das Kühlmedium wird dabei über die Düse auf die Batterie gesprüht, um eine möglichst großflächige Kühlung der Batterie zu erhalten. Vorzugsweise ist die Düse dabei oberhalb der Batterie angeordnet, so dass das Kühlmedium entlang des äußeren Umfangs der Batterie nach unten strömt. Weiter bevorzugt ist die Batterie in der Prüfzelle dabei waagrecht angeordnet, so dass eine möglichst große Fläche mit Kühlmedium benetzt werden kann.

Vorzugsweise umfasst die Sensoreinrichtung einen Temperatursensor und/oder einen Drucksensor und/oder einen Kraftsensor, insbesondere einen Dehnungsmessstreifen, und/oder einen Abstandssensor. Bevorzugt sind die Sensoren dabei an einer Außenseite der Batterie angeordnet. Hierdurch wird ein einfacher Aufbau des Batterieprüfstands erreicht und insbesondere können in kurzer Zeit eine Vielzahl von Batterien überprüft werden. Es sei angemerkt, dass besonders bevorzugt mehrere verschiedene Sensoren an der Batterie angeordnet werden. Alternativ ist es selbstverständlich auch möglich, mehrere gleichartige Sensoren an einer zu untersuchenden Batterie anzuordnen.

Vorzugsweise umfasst der Batterieprüfstand ferner eine Absaugvorrichtung, um Gase oder andere Medien aus dem Inneren der Prüfzelle abzusaugen. Hierdurch wird einerseits erreicht, dass beispielsweise giftige Gase sicher aus der Prüfzelle abgesaugt werden können und andererseits ein unverhältnismäßiger Druckanstieg innerhalb der Prüfzelle vermieden wird. Ferner kann dadurch ein Unterdruck in der Prüfzelle erzeugt werden.

Gemäß einer weiteren bevorzugten Ausgestaltung der vorliegenden Erfindung umfasst der Batterieprüfstand ferner noch eine Stromunterbrechungseinrichtung, so dass zusätzlich zu der Kühlvorrichtung noch eine weitere Sicherheitseinrichtung vorhanden ist. In einem kritischen Zustand der zu untersuchenden Batterie wird ein Batteriestrom mittels der Stromunterbrechungseinrichtung unterbrochen, um eine weitere funktionsbedingte Erwärmung der Batterie zu vermeiden.

Gemäß einer weiteren bevorzugten Ausgestaltung der vorliegenden Erfindung umfasst der Batterieprüfstand ferner eine erste Kühlvorrichtung und eine zweite Kühlvorrichtung.

Vorzugsweise umfasst die zweite Kühlvorrichtung wenigstens eine Peltier-Einheit, welche in der Prüfstelle angeordnet ist, um die Batterie zu kühlen. Die Peltier-Einheiten bestehen aus flächig aneinander gesetzten Peltier-Elementen, wobei die Peltier-Elemente beispielsweise aus zwei Halbleiterkeramiken bestehen, welche durch Metallbrücken verbunden sind. Wenn ein sicherheitskritischer Zustand der zu überprüfenden Batterie eintritt, wird die Peltier-Einheit bestromt, wodurch eine der Halbleiterkeramiken abgekühlt wird, während sich die andere erhitzt. Besonders bevorzugt umfasst die Kühlvorrichtung dabei eine Vielzahl von Peltier-Einheiten, welche in Pyramidenform angeordnet sind. Hierdurch können mehrere Stufen der Kühlung erreicht werden, so dass auch hohe Temperaturdifferenzen bis zu 70 Kelvin und Temperaturen unter 0°C erreicht werden können. Vorzugsweise ist dabei die letzte Stufe der Vielzahl von Peltier-Einheiten mit einem Wärmeübertrager verbunden, welcher die Abwärme aus der Prüfzelle transportiert.

Der erfindungsgemäße Batterieprüfstand kann dabei einerseits in Forschungs- und Entwicklungsabteilungen verwendet werden, welche Batterien untersuchen, und kann ferner ebenfalls auch bei Batterieherstellern für eine Qualitätskontrolle der hergestellten Batterien verwendet werden. Hierbei weist der erfindungsgemäße Batterieprüfstand keinerlei Einschränkung hinsichtlich der zu überprüfenden Batterie auf. Insbesondere können auch Forschungsmuster, Halbzellen (elektrochemische Muster), Batteriepacks, welche aus Modulen zusammengesetzt sind und hohe Leistungen aufweisen, oder auch Lithium-Ionen-Batterien überprüft werden.

### Kurze Beschreibung der Zeichnungen

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Ansicht eines Batterieprüfstands gemäß einem ersten Ausführungsbeispiel der Erfindung, und
- Figur 2: eine schematische Ansicht eines Batterieprüfstands gemäß einem zweiten Ausführungsbeispiel der Erfindung.

### Ausführungsform der Erfindung

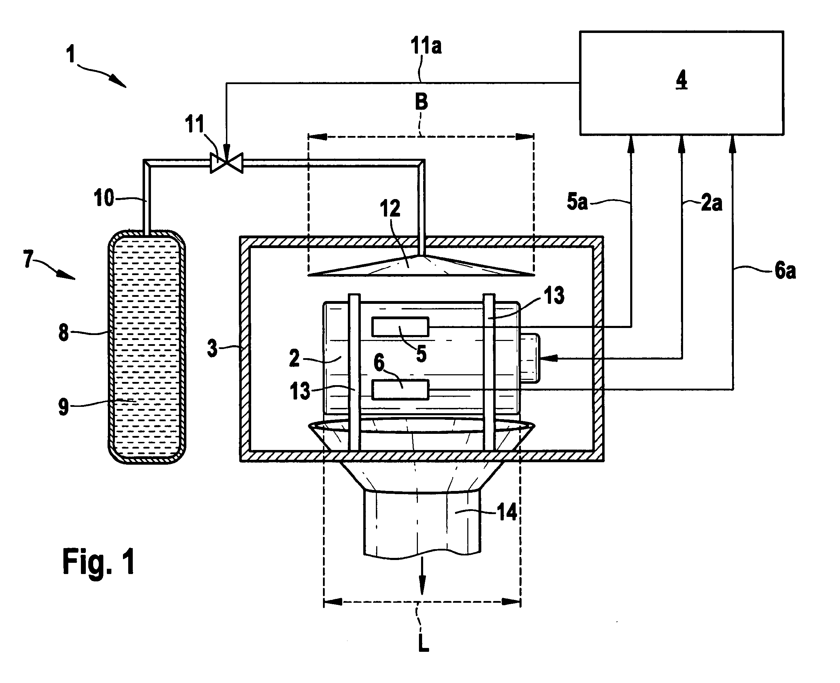

Nachfolgend wird unter Bezugnahme auf Fig. 1 ein Batterieprüfstand 1 gemäß einem bevorzugten Ausführungsbeispiel der Erfindung im Detail beschrieben.

Wie aus Fig. 1 ersichtlich ist, umfasst der Batterieprüfstand 1 eine Prüfzelle 3, in welcher eine zu überprüfende Batterie 2 angeordnet ist. Die Batterie 2 ist dabei in einer Halterung 13, welche mehrere schmale Träger umfasst, gehalten. Die Verwendung der schmalen Träger ermöglicht es insbesondere, die Versuchsergebnisse nicht aufgrund von thermischen Lasten zu verfälschen. Ferner kann eine gute Zugänglichkeit zu der zu überprüfenden Batterie 2 gewährleistet werden.

Der Batterieprüfstand 1 umfasst ferner eine Regelungseinrichtung 4 und eine Kühlvorrichtung 7. Weiterhin sind ein Drucksensor 5 und ein Temperatursensor 6 vorgesehen, welche an einer Außenseite der Batterie 2 fixiert sind. Der Drucksensor 5 und der Temperatursensor 6 sind über Leitungen 5a und 6a mit der Regelungseinheit 4 verbunden. Das Bezugszeichen 2a bezeichnet dabei eine elektrische Verbindung zwischen der Batterie 2 und der Regelungseinheit 4. Die Kühlvorrichtung 7 umfasst einen Druckbehälter 8, in welchem ein Kühlmedium 9 unter Druck angeordnet ist. Der Druckbehälter 8 ist über eine Leitung 10 mit einem Inneren der Prüfzelle 3 verbunden. In der Leitung 10 ist dabei ein Schaltventil 11 angeordnet, welches als Sperrventil ausgebildet ist und die Leitung 10 freigibt bzw. verschließt. Wie aus Fig. 1 ersichtlich ist, ist das Schaltventil 11 über eine Leitung 11 a ebenfalls mit der Regelungseinheit 4 verbunden. Am Ende der Leitung 10 ist ferner eine Düse 12 angeordnet, um das bei einem geöffnete Schaltventil 11 zugeführte Kühlmedium 9 zu versprühen. Wie aus Fig. 1 ersichtlich ist, weist die Düse 12 dabei eine Breite B auf, welche größer als eine Länge L der Batterie 2 ist. Die Düse 12 ist oberhalb der Batterie 2 angeordnet, so dass die Batterie 2 von oben mit Kühlmittel besprüht wird und das Kühlmittel dann an der Außenseite der Batterie nach unten strömen bzw. laufen kann. Hierdurch werden effektiv auch mittlere und untere Bereiche der Batterie 2 gekühlt.

Das Bezugszeichen 14 bezeichnet ferner eine Absaugvorrichtung, um Gase und/oder Flüssigkeiten aus der Prüfzelle 3 abzusaugen und in der Prüfzelle einen Unterdruck zu erzeugen.

Die Funktion des Batterieprüfstands 1 in einem Notfall ist dabei wie folgt. Die Sensoren 5, 6 erfassen kontinuierlich in vorbestimmten Abständen entsprechende Sensorwerte, welche der Regelungseinheit 4 zugeführt werden. Die Regelungseinheit 4 überprüft die zugeführten Sensorwerte beispielsweise durch einen Vergleich mit gespeicherten Werten. Sobald ein Sensorwert einen vorbestimmten Schwellenwert erreicht, bestimmt die Regelungseinheit 4, dass ein Notfall vorliegt und aktiviert die Kühlvorrichtung 7. Hierzu wird das Schaltventil 11 geöffnet, so dass das Kühlmedium 9 über die Leitung 10 zur Düse 12 geführt werden kann. Durch die schlagartige Ausdehnung des Kühlmediums an der Düse 12 kühlt sich das Kühlmedium ab und wird auf die Außenseite der Batterie 2 zugeführt. Hierbei sei angemerkt, dass das Kühlmedium ein Gas oder auch eine Flüssigkeit sein kann. Vorzugsweise wird gleichzeitig auch die Absaugvorrichtung 14 aktiviert, um durch eine Druckabsenkung in der Prüfzelle 3 eine Effektivität der Kühlung zu erhöhen. Es sei ferner angemerkt, dass nicht nur die Batterie direkt, sondern beispielsweise auch ein Druck innerhalb der Prüfzelle 3 überwacht werden kann. Auch können beispielsweise Sensoren zur Messung einer auf ein Batteriegehäuse wirkenden Kraft durch eine Gasentfaltung im Inneren der Batterie vorgesehen werden, welche z. B. als Dehnmessstreifen an der Außenseite der Batterie 2 angebracht werden können. Alternativ oder zusätzlich kann eine Ausdehnung der Batterie auch berührungslos, beispielsweise mittels Abstandssensoren, z. B. über Batterieangulation, erfasst werden.

Somit kann erfindungsgemäß ein Batterieprüfstand mit einer erhöhten Sicherheit durch die Kühlvorrichtung 7 bereitgestellt werden. Hierdurch können kritische Situationen bei der Überprüfung von Batterien durch die Regelungseinheit 4 erkannt werden und mittels der Kühlvorrichtung 7 die Batterie abgekühlt werden bzw. ein Druck abgesenkt werden, um eine Gefahrensituation zu vermeiden. Es sei hierbei angemerkt, dass selbstverständlich die Kühlvorrichtung 7 auch mehrfach angeordnet sein kann, um eine Redundanz im Notfall aufzuweisen. Auch können mehrere Kühlvorrichtungen verwendet werden, um mehrere Bereiche der Batterie 2 abzukühlen. Beispielsweise können zusätzliche Düsen seitlich oder an den Stirnseiten der Batterie 2 angeordnet werden. Die Düsen können dabei über nur einen Druckbehälter 8 versorgt werden, oder alternativ auch jeweils über separate Druckbehälter mit Kühlmedium versorgt werden.

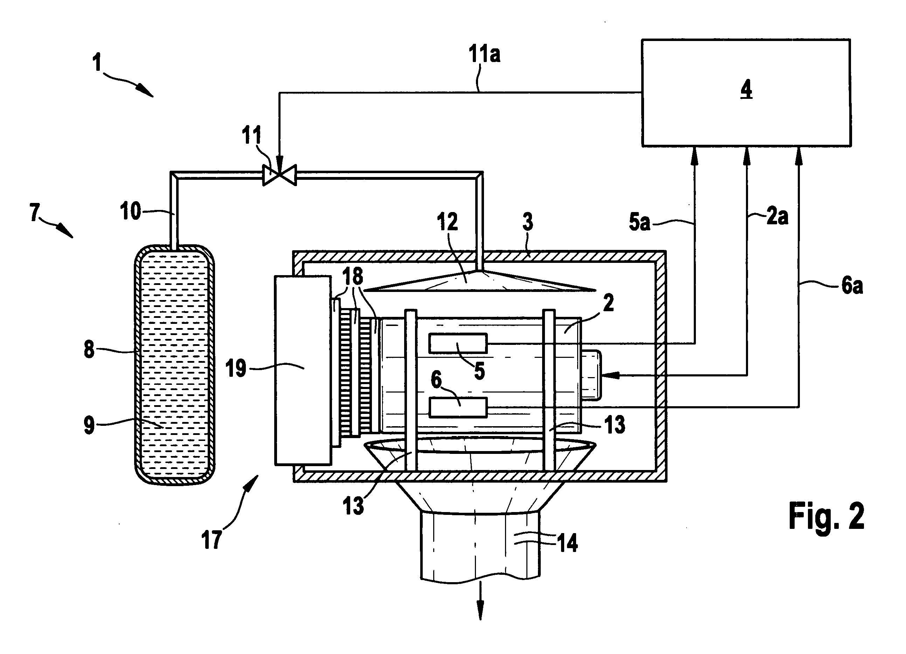

Nachfolgend wird unter Bezugnahme auf Fig. 2 ein Batterieprüfstand 1 gemäß einem zweiten Ausführungsbeispiel der Erfindung im Detail beschrieben. Gleiche bzw. funktional gleiche Teile sind dabei mit den gleichen Bezugszeichen wie im ersten Ausführungsbeispiel bezeichnet.

Im Unterschied zum ersten Ausführungsbeispiel umfasst der Batterieprüfstand 1 des zweiten Ausführungsbeispiels zwei Kühlvorrichtungen. Eine erste Kühlvorrichtung 7 ist wie im ersten Ausführungsbeispiel mit Druckbehälter 8, Leitung 10, Schaltventil 11 und Düse 12 ausgebildet. Ferner ist eine zweite Kühlvorrichtung 17 vorgesehen, welche eine Vielzahl von Peltier-Einheiten 18 und einen Wärmeübertrager 19 umfasst. Der Wärmeübertrager 19 ist im Gehäuse der Prüfzelle 3 angeordnet und befindet sich mit seiner nach innen gerichteten Seite mit den Peltier-Einheiten 18 in Verbindung. Die Peltier-Einheiten 18 sind dabei in Pyramidenform aufgebaut und umfassen jeweils flächig aneinander gesetzte Peltier-Elemente. Durch den pyramidenförmigen Aufbau ergibt sich ein mehrstufiges Kühlsystem, wobei die letzte Stufe mit dem Wärmeübertrager 19 in Verbindung steht. Im gezeigten Ausführungsbeispiel ist die zweite Kühlvorrichtung 17 mit einem Ende der Batterie 2 verbunden. Alternativ ist es jedoch auch möglich, dass die zweite Kühlvorrichtung 17 erst im Notfall mit der Batterie verbunden wird. Dies kann beispielsweise derart realisiert werden, dass die zweite Kühlvorrichtung 17 auf einer Linearzuführungsanordnung angeordnet ist und bei Erfassung eines Notfalls die zweite Kühlvorrichtung 17 linear bewegt wird, bis sie mit der Batterie 2 in Kontakt steht, um Wärme von der Batterie abzuführen. Ansonsten entspricht dieses Ausführungsbeispiel dem ersten Ausführungsbeispiel, so dass auf die dort gegebene Beschreibung verwiesen werden kann. Es sei hierbei ferner angemerkt, dass als zweite Kühlvorrichtung alternativ auch lediglich ein Wärmeübertrager mit einem Flüssigmedium oder eine zweite Kühlvorrichtung mit einem Kaltluftstrom möglich wäre. Die Verwendung der Peltier-Einheiten als zweie Kühlvorrichtung 17 weist jedoch demgegenüber den Vorteil eines kleinen Bauraums und einer sehr effektiven Kühlungsmöglichkeit auf.

Ferner sei angemerkt, dass der Batterieprüfstand zusätzlich noch eine Stromunterbrechungseinrichtung umfassen kann, um einen von der Batterie 2 erzeugten Strom in einem Notfall zu unterbrechen. Hierdurch wird sichergestellt, dass keine zusätzliche Wärme durch Betreiben der Batterie 2 erzeugt wird.

## Patentansprüche

1. Batterieprüfstand, umfassend:
- eine Prüfzelle (3), in welcher eine zu prüfende Batterie (2) angeordnet ist,
- eine Halterung (13), welche in der Prüfzelle (3) angeordnet ist, und in der Lage ist, die Batterie (2) aufzunehmen,
- eine Regelungseinheit (4), welche mit einer in der Halterung (13) angeordneten Batterie (2) verbindbar ist,
- wenigstens eine Sensoreinrichtung (5, 6) zur Überwachung der Batterie (2), wobei die Sensoreinrichtung (5, 6) mit der Regelungseinheit (4) verbunden ist, und
- eine Kühlvorrichtung (7), welche mit der Regelungseinheit (4) verbunden ist und welche ausgelegt ist, in einer Gefahrensituation die Batterie (2) in der Prüfzelle (3) von außen zu kühlen, **dadurch gekennzeichnet, dass** die Kühlvorrichtung (7) einen mit Kühlmedium geftillten Druckbehälter (8), welcher über eine Leitung (10) mit der Prüfzelle (3) verbunden ist, und ein Schaltventil (11) umfasst, welches mit der Regelungseinheit verbunden ist, wobei das Schaltventil (11) in der Leitung (10) angeordnet ist und mittels der Regelungseinheit (4) öffenbar und verschließbar ist, um das Kühlmedium auf die Batterie (2) zu leiten.

2. Batterieprüfstand nach Anspruch 1, **dadurch gekennzeichnet, dass** die Kühlvorrichtung (7) ferner eine Düse (12) umfasst, welche in der Prüfzelle (3) angeordnet ist, um das Kühlmedium auf die Batterie (2) zu leiten.

3. Batterieprüfstand nach einem der vorherigen Ansprüche, **dadurch gekennzeichnet, dass** die Sensoreinrichtung einen Temperatursensor (6) und/oder einen Drucksensor (5) und/oder einen Kraftsensor, insbesondere Dehnungsmessstreifen, und/oder einen Abstandssensor umfasst.

4. Batterieprüfstand nach einem der vorhergehenden Ansprüche, ferner umfassend eine Absaugvorrichtung (14), um Medium aus der Prüfzelle (3) abzusaugen und insbesondere einen Unterdruck in der Prüfzelle (3) zu erzeugen.

5. Batterieprüfstand nach einem der vorhergehenden Ansprüche, ferner umfassend eine Stromunterbrechungseinrichtung, um einen durch die Batterie erzeugten Strom zu unterbrechen.

6. Batterieprüfstand nach einem der vorhergehenden Ansprüche, umfassend wenigstens eine erste Kühlvorrichtung (7) und eine zweite Kühlvorrichtung (17).

7. Batterieprüfstand nach Anspruch 6, **dadurch gekennzeichnet, dass** die zweite Kühlvorrichtung (17) eine Peltier-Einheit (18) ist, welche in der Prüfzelle (3) angeordnet ist, um die Batterie (2) zu kühlen.

8. Batterieprüfstand nach Anspruch 7, **gekennzeichnet durch** eine Vielzahl von Peltier-Einheiten (18), welche in Pyramidenform angeordnet sind.

9. Batterieprüfstand nach Anspruch 6 oder 7, **dadurch gekennzeichnet, dass** die zweite Kühlvorrichtung ferner einen Wärmeübertrager (19) umfasst, welcher mit der Peltier-Einheit (18) verbunden ist, um Wärme von der Peltier-Einheit (18) zu einer Außenseite der Prüfzelle (3) zu übertragen.

## Claims

1. Battery test rig comprising:
- a test cell (3) in which a battery (2) to be tested is arranged,
- a holder (13) which is arranged in the test cell (3) and is able to hold the battery (2),
- a regulation unit (4) which can be connected to a battery (2) arranged in the holder (13),
- at least one sensor device (5, 6) for monitoring the battery (2), the sensor device (5, 6) being connected to the regulation unit (4), and
- a cooling apparatus (7) which is connected to the regulation unit (4) and is designed to cool the battery (2) in the test cell (3) from the outside in a hazard situation, **characterized in that** the cooling apparatus (7) comprises a pressure vessel (8), which is filled with cooling medium and is connected to the test cell (3) via a line (10), and a switching valve (11) which is connected to the regulation unit, the switching valve (11) being arranged in the line (10) and being able to be opened and closed using the regulation unit (4) in order to lead cooling medium to the battery (2).

2. Battery test rig according to Claim 1, **characterized in that** the cooling apparatus (7) also comprises a nozzle (12) which is arranged in the test cell (3) in order to lead the cooling medium to the battery (2).

3. Battery test rig according to one of the preceding claims, **characterized in that** the sensor device comprises a temperature sensor (6) and/or a pressure sensor (5) and/or a force sensor, in particular a strain gage, and/or a distance sensor.

4. Battery test rig according to one of the preceding claims, also comprising a suction apparatus (14) in order to suction medium from the test cell (3) and, in particular, to generate a vacuum in the test cell (3).

5. Battery test rig according to one of the preceding claims, also comprising a current interruption device in order to interrupt a current generated by the battery.

6. Battery test rig according to one of the preceding claims, comprising at least one first cooling apparatus (7) and one second cooling apparatus (17).

7. Battery test rig according to Claim 6, **characterized in that** the second cooling apparatus (17) is a Peltier unit (18) which is arranged in the test cell (3) in order to cool the battery (2).

8. Battery test rig according to Claim 7, **characterized by** a multiplicity of Peltier units (18) which are arranged in the form of a pyramid.

9. Battery test rig according to Claim 6 or 7, **characterized in that** the second cooling apparatus also comprises a heat exchanger (19) which is connected to the Peltier unit (18) in order to transfer heat from the Peltier unit (18) to an outer side of the test cell (3).

## Revendications

1. Banc d'essai de batterie, comprenant :
une cellule de test (3) dans laquelle une batterie (2) à tester est placée,
un support (13) disposé dans la cellule de test (3) et apte à reprendre la batterie (2),
une unité de régulation (4) qui peut être reliée à une batterie (2) placée dans le support (13),
au moins un dispositif de détection (5, 6) qui surveille la batterie (2), le dispositif de détection (5, 6) étant raccordé à l'unité de régulation (4) et
un dispositif de refroidissement (7) raccordé à l'unité de régulation (4) et conçu pour refroidir de l'extérieur la batterie (2) placée dans la cellule de test (3) en cas de situation dangereuse,
**caractérisé en ce que**
le dispositif de refroidissement (7) comporte un récipient sous pression (8) rempli d'un fluide de refroidissement et raccordé à la cellule de test (3) par un conducteur (10) ainsi qu'une soupape de commutation (11) raccordée à l'unité de régulation, la soupape de commutation (11) étant disposée dans le conducteur (10) et pouvant être ouverte et fermée au moyen de l'unité de régulation (4) pour amener le fluide de refroidissement sur la batterie (2).

2. Banc d'essai de batterie selon la revendication 1, **caractérisé en ce que** le dispositif de refroidissement (7) comporte en outre une tuyère (12) disposée dans la cellule de test (3) pour amener le fluide de refroidissement sur la batterie (2).

3. Banc d'essai de batterie selon l'une des revendications précédentes, **caractérisé en ce que** le dispositif de détection comporte une sonde de température (6), une sonde de pression (5), une sonde de force, en particulier un ruban de mesure d'allongement, et/ou une sonde de distance.

4. Banc d'essai de batterie selon l'une des revendications précédentes, comportant en outre un dispositif d'aspiration (14) qui aspire le fluide hors de la cellule de test (3) et apte en particulier à établir une dépression dans la cellule de test (3).

5. Banc d'essai de batterie selon l'une des revendications précédentes, comportant en outre un dispositif d'interruption de courant qui interrompt le courant produit par la batterie.

6. Banc d'essai de batterie selon l'une des revendications précédentes, comportant en outre au moins un premier dispositif de refroidissement (7) et un deuxième dispositif de refroidissement (17).

7. Banc d'essai de batterie selon la revendication 6, **caractérisé en ce que** le deuxième dispositif de refroidissement (17) est une unité Peltier (18) disposée dans la cellule de test (3) pour refroidir la batterie (2).

8. Banc d'essai de batterie selon la revendication 7, **caractérisé par** plusieurs unités Peltier (18) disposées en pyramide.

9. Banc d'essai de batterie selon les revendications 6 ou 7, **caractérisé en ce que** le deuxième dispositif de refroidissement comporte en outre un dispositif (19) de transfert de chaleur raccordé à l'unité Peltier (18) pour transférer la chaleur de l'unité Peltier (18) vers l'extérieur de la cellule de test (3).
